# EUROPEAN PATENT SPECIFICATION

(11) **EP 4 500 926 B1**
(45) Date of publication and mention of the grant of the patent: **09.12.2026**
(21) Application number: 23714693.1
(22) Date of filing: 24.03.2023
(51) Int. Cl.: H04W 24/02, H04W 24/04

(54) **RADIO ACCESS NETWORK (RAN) ANALYTICS EXPOSURE MECHANISM**
ANALYSEEXPOSITIONSMECHANISMUS FÜR FUNKZUGANGSNETZWERK (RAN)
MÉCANISME D'EXPOSITION D'ANALYSE DE RÉSEAU D'ACCÈS RADIO (RAN)

(30) Priority: 30.03.2022 US 202263325352 P
(43) Date of publication of application: 05.02.2025
(73) Proprietor: Telefonaktiebolaget LM Ericsson (publ), 164 83 Stockholm (SE)
(72) Inventor: ESSIGMANN, Kurt, 52072 Aachen (DE); MILDH, Gunnar, 192 55 Sollentuna (SE)
(74) Representative: Ericsson
(86) International application number: PCT/EP2023/057611
(87) International publication number: WO 2023/186724

(56) References cited:
- EP-A1- 4 156 736
- WO-A1-2021/235902
- LENOVO: "Solution for KI#4: Supporting analytics for location accuracy", vol. SA WG2, no. e-meeting; 20220406 - 20220412, 29 March 2022 (2022-03-29), XP052133278, Retrieved from the Internet <URL:https://ftp.3gpp.org/tsg_sa/WG2_Arch/TSGS2_150E_Electronic_2022-04/Docs/S2-2202441.zip> [retrieved on 20220329]

## Description

### TECHNICAL FIELD

The present disclosure generally relates to communication networks, and more specifically to Radio Access Network (RAN) Analytics Exposure Mechanism.

### BACKGROUND

### Motivation for RAN analytics information exposure

Currently, the Open-Radio Access Network (O-RAN) standard includes a proposal to develop a mechanism for RAN analytics information exposure from the RAN. A goal is to enable exposure of RAN information to external (third party) applications and/or servers to improve the performance of these applications. Examples of proposed use cases include exposing the modulation and coding scheme (MCS) that a user equipment (UE) is using to a cloud-based interactive service to enable the service to estimate the quality of experience (QoE) of the service and to trigger actions to adapt the video codec rates, etc. Similar proposals have been discussed in an Internet Engineering Task Force (IETF) Internet-Draft titled "Mobile and Wireless Information Exposure (MoWIE) for Network Aware Application" by C. Xiong et al., dated July 11, 2021.

The information exposed from the RAN may include any of the following:
- Real-time or Non-real time information;
- Raw information (measurements, events) or Processed information (predictions, filtered information, combined information);
- Information representing the current or past state of a connection, or future predicted state of a connection;
- Information related to specific UEs or services, or information related to network resources (e.g. cell load, interference);
- Static (e.g., network information such as number of carriers, neighboring cell relations) or dynamic information (e.g. varying congestion, mobility information); or
- Predicted indications about user data latency, radio coverage and bandwidth based on UE location, network (NW) topology and trajectory analysis.

Other examples of use cases for RAN analytics information exposure discussed include:
- Exposing packet delay information to enable application to avoid sending packets that will be buffered in the network.
- Providing UE location information, or mobility predictions, which can be used to improve QoE considering the current and future location of the device (e.g. switch to lower video codec rate for users entering poor coverage).

### Current proposed solution

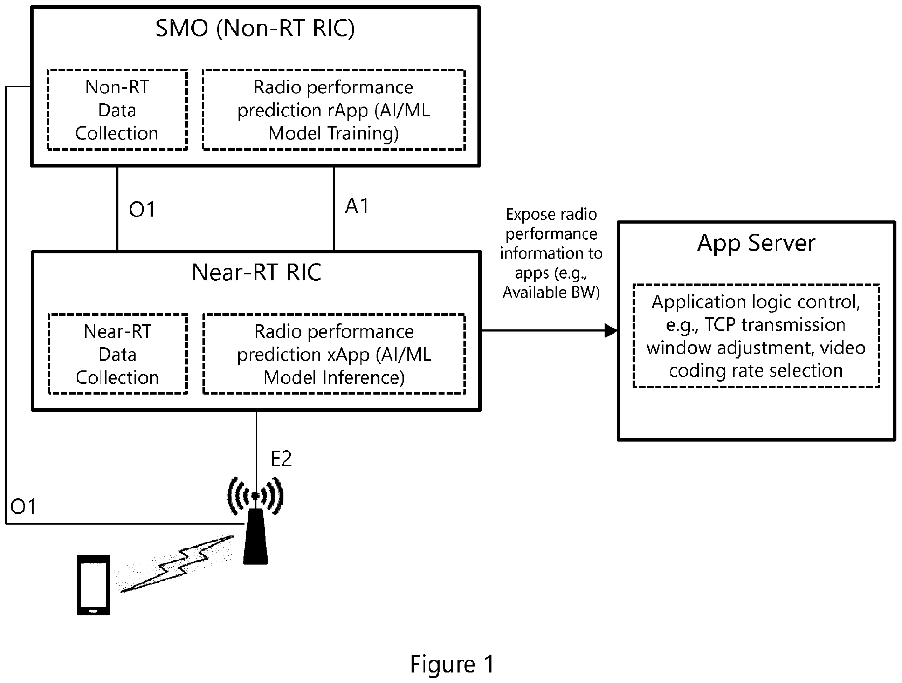

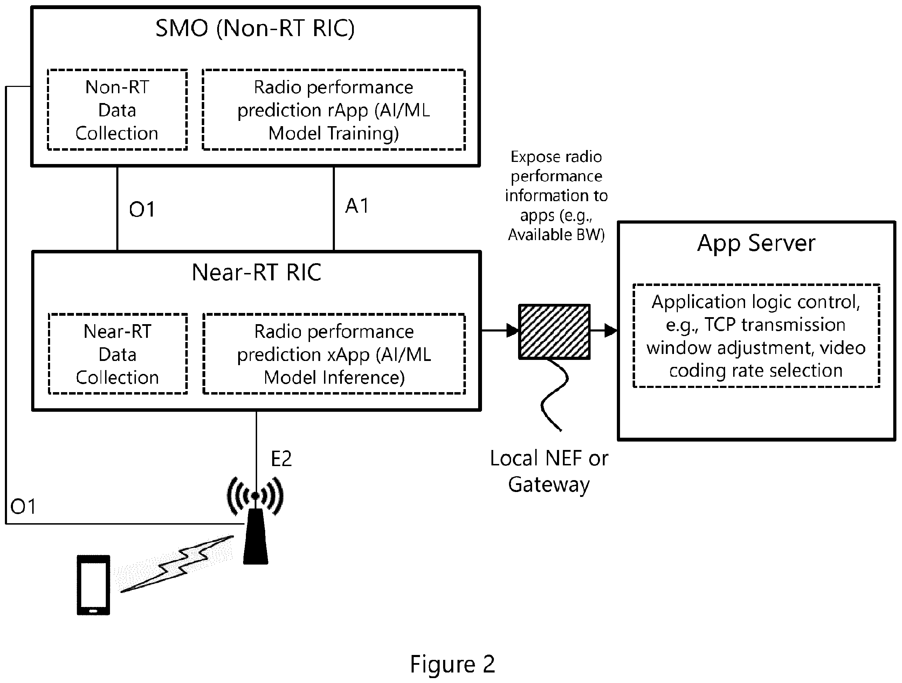

High-level proposals have been made with respect to O-RAN standardization on how to support RAN analytics exposure. For purposes of discussion, these proposals may be referred to as "Proposed Solution A." Figures 1 and 2 illustrate two options for how the Near-Real Time (Near-RT) RAN Intelligent Controller (RIC) may collect information over E2 from radio nodes (e.g., radio base stations). An xApp then processes the collected information by performing analytics (e.g., radio performance prediction).

Figure 1 illustrates an example where the analytics are exposed to an external server supporting an end user application. Figure 2 illustrates an example where the analytics are exposed to a Local Network Exposure Function (NEF) or Gateway so that the analytics can later be exposed to the end user application. The Near-RT RIC radio performance prediction model predicts the future radio performance for a specific UE/cell, for example.

Proposed Solution A is based on defining a new interface or new exposure services from the Near-RT RIC that can be accessed by the external application server or local NEF or gateway to obtain the RAN analytics information. The application running in the external application server then executes logic based on the collected information (e.g., transmission control protocol (TCP) transmission window adjustment, video coding rate selection, etc.) to improve QoE for the applications.

Below are some examples of RAN analytics information that may be calculated by Near-RT RIC platform or xApp and further provided to other xApps to enable the RAN optimization:
- predicted cell resource status, e.g., active user number, physical resource bock (PRB) usage;
- predicted user quality of service (QoS) and/or QoE;
- predicted user coverage performance, e.g., inter-frequency neighbor cell reference signal received power (RSRP); or
- UE location analysis results, UE trajectory analysis results.

### Overview reference O-RAN architecture

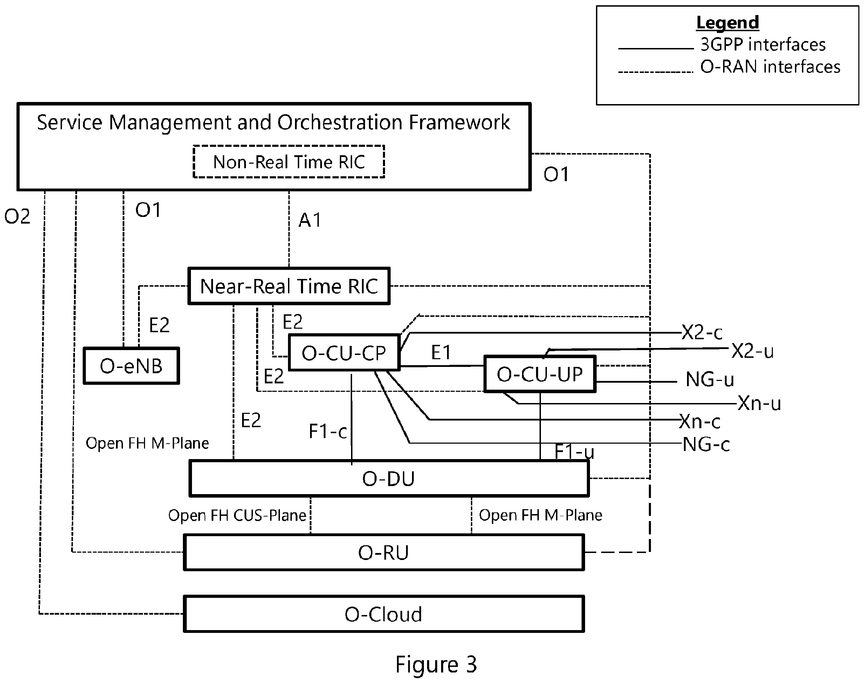

Figure 3 depicts an example O-RAN architecture. The architecture does not yet include RAN analytics exposure interfaces.

There currently exist certain challenge(s). The above-described Proposed Solution A enables near real-time sharing of RAN analytics information from the Near-RT RIC to the external application server and application by defining a new interface to the Near-RT RIC. Proponents of Proposed Solution A state that this is beneficial because the Near-RT RIC is located close to data sources in the RAN, such as the cellular traffic nodes, for example: New Radio base station (gNB); O-RAN Central Unit - User Plane (O-CU-UP); O-RAN Central Unit - Control Plane (O-CU-CP); O-RAN Distributed Unit (O-DU); and O-RAN Radio Unit (O-RU).

The direct interface proposed in Proposed Solution A, however, includes drawbacks. For example, one drawback involves security issues (lack of authentication and authorization) with allowing external servers to have direct access to the radio-associated nodes, such as the Near-RT RIC. Another drawback involves practical issues for external servers to obtain the address of the Near-RT RICs and to know which Near-RT RIC serves a specific cell, region, or UE.

There are issues dealing with UE mobility. For example, when a UE changes gNB it might also enter a service area served by another Near-RT RIC. It is uncertain how the external server will know about this change. This may result in an interruption to the flow of analytics information.

The Near-RT RIC might lack complete knowledge about the system. Certain information that may be useful for RAN Analytics Processing may only be available in other parts of the system, such as the Service Management & Orchestrator (SMO) or Non-RT RIC. Also, there is no information in the Near-RT RIC about a UE's unique external identities, such as Internet Protocol (IP) address, Ethernet address, Generic Public Subscription Identifier (GPSI), or Subscription Permanent Identifier (SUPI).

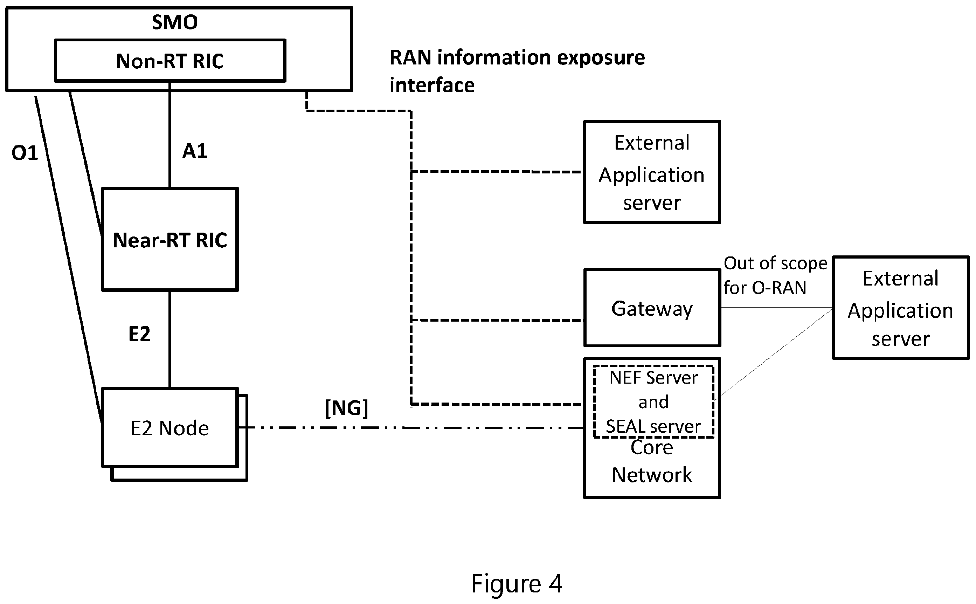

Figure 4 illustrates an alternative solution ("Proposed Solution B") not yet discussed in O-RAN standardization. Proposed Solution B offers RAN analytics information from both the SMO and the Non-RT RIC. For example, the SMO and the Non-RT RIC will collect RAN information from the radio traffic nodes or from the Near-RT RIC and expose this information to the external services. In Proposed Solution B, the SMO is the first point of contact for network external application servers or network internal exposure servers. The SMO then decides if the analytics data is to be provided by the SMO (respectively the Non-RT RIC in the SMO) or by a Near-RT RIC via the SMO and Non-RT RIC.

Proposed Solution B would avoid some of the drawbacks listed above for Proposed Solution A. For example, Proposed Solution B would be more secure because the SMO/Non-RT RIC is most likely deployed in a more central and secure site and the SMO/Non-RT RIC already has a framework in place for interacting with external sources. Because the SMO/Non-RT RIC is also more centrally located and likely covers a larger part of the network, there will be fewer issues for the external servers to know which SMO/Non-RT RIC they should interact with, and it is less likely that the UE will move into an area served by another SMO/Non-RT RIC.

Proposed Solution B would allow for uniquely identifying the UE (group of UEs) for which the analytics data is relevant. Finally, the SMO/Non-RT RIC will have access to more non-RAN related information such as information from transport, core network, external application servers, operator management system, etc., which may be useful to improve RAN analytics.

Proposed Solution B, however, presents the drawback of added delay of first sending the data from the radio nodes (referred to as E2 nodes in O-RAN) to the SMO/Non-RT RIC for processing prior to exposing the data to the external servers. The document of Lenovo: "Solution for KI#4: Supporting analytics for location accuracy", 3GPP DRAFT; S2-2202441, vol. SA WG2, e-meeting; 29 March 2022, XP052133278, discloses an example of how to do the analytics for location accuracy.

### SUMMARY

As described above, certain challenges currently exist with RAN analysis information exposure. Certain aspects of the disclosure and their embodiments may provide solutions to these or other challenges. For example, in certain embodiments the exposure of RAN analytics information is controlled by the SMO/Non-RT RIC, but where the actual RAN analytics information may be flexibly exposed either from the SMO/Non-RT RIC or from the Near-RT RIC directly to the external servers depending on the use case and other requirements. In some embodiments, the decision to expose the RAN analytics information either from the SMO/Non-RT RIC or from the Near-RT RIC directly to the external servers may be taken by the SMO/Non-RT RIC based on the type of requested analytics and based on policing data that the mobile network operator (MNO) may have defined. Particular embodiments combine the benefits and avoids the respective drawbacks of Proposed Solution A and Proposed Solution B described above.

The proposed technology is defined by the appended independent claims and further embodiments are described by the dependent claims.

Certain embodiments may provide one or more of the following technical advantages. Certain embodiments may expose Near-Realtime (RT) RAN analytics data without the need to directly expose the Near-RT RIC to external application servers. This is possible because the SMO/Non-RT RIC controls the exposure. By reducing the latency of providing the analytics data, the end user applications may perform more efficiently. Further benefits of controlling the exposure from the SMO/Non-RT RIC are described with respect to certain embodiments.

Particular embodiments provide simplified and improved security at least because the SMO/Non-RT RIC is most likely deployed in a more central and secure site and it is possible to reuse other frameworks in the SMO/Non-RT RIC for interacting with external sources.

According to certain embodiments, because the SMO/Non-RT RIC is centrally located and likely cover a large part of the network, there may be fewer issues for the external servers to determine which SMO/Non-RT RIC they should interact with, and it is less likely that a UE will move into an area served by another SMO/Non-RT RIC.

In some embodiments, the SMO/Non-RT RIC has access to non-RAN related information, such as information from transport, core network, extemal application servers, operator management system etc., which may be useful to improve RAN analytics.

In some embodiments, analytics data may be policed (granularity level, meta data, etc.) based on a MNO's business aspects, i.e. some application servers (and application services) may be prioritized over other services based on commercial considerations that are administered in the SMO but not in the Near-RT RIC.

### BRIEF DESCRIPTION OF THE DRAWINGS

The present disclosure may be best understood by way of example with reference to the following description and accompanying drawings that are used to illustrate embodiments of the present disclosure. In the drawings:
Figure 1 illustrates an example of exposing RAN analytics information to an external application server supporting an end user application;
Figure 2 illustrates an example of exposing RAN analytics information to an end user application via a Local Network Exposure Function (NEF) or Gateway;
Figure 3 depicts an example of an open-radio access network (O-RAN) architecture;
Figure 4 illustrates an alternative proposed solution (Solution B);
Figures 5A to 5D illustrate exposing RAN analytics information via different interfaces, according to certain embodiments;
Figure 6 illustrates a first example flowchart for exposing RAN analytics information to an end user application, according to certain embodiments;
Figure 7 illustrates a second example flowchart for exposing RAN analytics information to an end user application, according to certain embodiments;
Figure 8 illustrates a third example flowchart for exposing RAN analytics information to an end user application, according to certain embodiments;
Figure 9 shows an example of a communication system, according to certain embodiments;
Figure 10 shows a user equipment (UE), according to certain embodiments;
Figure 11 shows a network node, according to certain embodiments;
Figure 12 is a block diagram of a host, according to certain embodiments;
Figure 13 is a block diagram illustrating a virtualization environment in which functions implemented by some embodiments may be virtualized;
Figure 14 shows a communication diagram of a host communicating via a network node with a UE over a partially wireless connection in accordance with some embodiments;
Figure 15 illustrates an example flowchart for a method performed by a service gateway for exposing RAN analytics information, according to certain embodiments; and
Figure 16 illustrates an example flowcharts for a method performed by a RAN radio manager for exposing RAN analytics information, according to certain embodiments

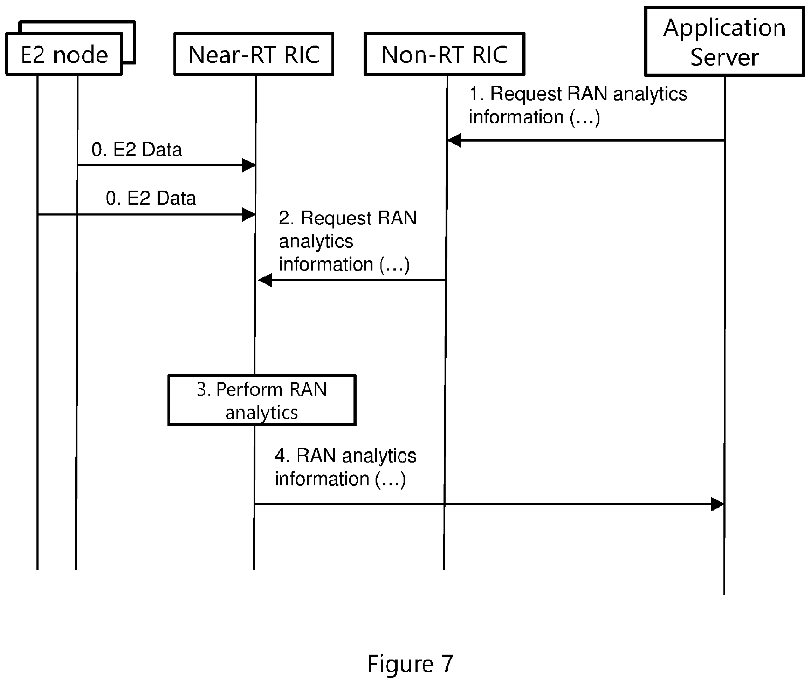

In the following the invention is best understood in view of figures 7, 8, 15 and 16 and the associated passages. The remaining embodiments, aspects and examples disclosed below are included for illustrative purpose and for facilitating the understanding of the invention.

### DETAILED DESCRIPTION

In the embodiments and examples described herein, numerous specific details such as logic implementations, types and interrelationships of system components, etc. are set forth to provide a more thorough understanding of particular embodiments. It should be appreciated, however, that particular embodiments may be practiced without such specific details. In other examples, control structures, circuits and instruction sequences have not been shown in detail to avoid obscuring particular details

As used herein, the terms "first", "second" and so forth refer to different elements. The singular forms "a", "an", and "the" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "according to" is to be read as "at least in part according to". The term "one embodiment" and "an embodiment" are to be read as "at least one embodiment". The term "another embodiment" is to be read as "at least one other embodiment".

Unless otherwise defined, all terms (including technical and scientific terms) used herein have the same meanings as commonly understood. It will be further understood that a term used herein should be interpreted as having a meaning consistent with its meaning in the context of this specification and the relevant art and will not be interpreted in an idealized or overly formal sense unless expressly so defined herein.

An electronic device stores and transmits (internally and/or with other electronic devices over a network) code (which is composed of software instructions and which is sometimes referred to as computer program code or a computer program) and/or data using machine-readable media (also referred to as computer-readable media), such as machine-readable storage media (e.g., magnetic disks, optical disks, read only memory (ROM), flash memory devices, phase change memory) and machine-readable transmission media (also referred to as a carrier) (e.g., electrical, optical, radio, acoustical or other form of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For example, an electronic device may include non-volatile memory containing the code because the non-volatile memory can persist code/data even when the electronic device is turned off (when power is removed), and while the electronic device is turned on, that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set of or one or more physical network interfaces to establish network connections (to transmit and/or receive code and/or data using propagating signals) with other electronic devices. One or more parts of an embodiment disclosed herein may be implemented using different combinations of software, firmware, and/or hardware.

Some embodiments will now be described more fully with reference to the accompanying drawings. Embodiments are provided by way of example to convey the scope of the subject matter to those skilled in the art.

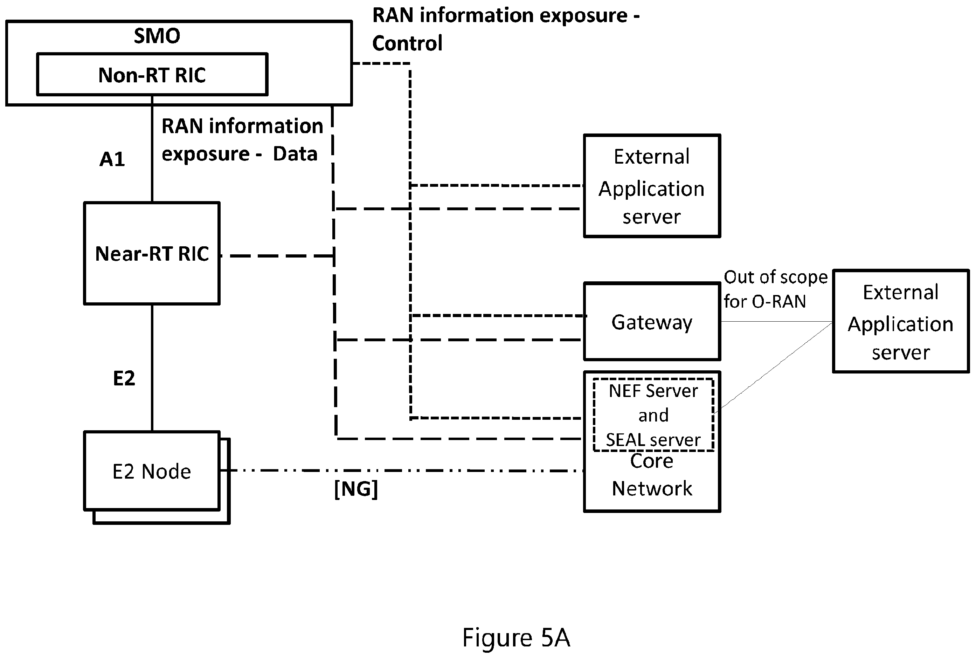

Figure 5A illustrates exposing RAN analytics information via different interfaces, according to certain embodiments. As can be seen in Figure 5A, the SMO/Non-RT RIC may expose, cause the Near-RT RIC to expose, or otherwise facilitate exposing the RAN analytics information to the external application servers.

Certain embodiments of the present disclosure are based on the idea that the SMO/Non-RT RIC has control over how and/or when RAN analytics information is exposed to external application services. For example, when the external application service wants to obtain or subscribe to update RAN analytics information, the external application service sends a request to the SMO Non-RT RIC. The request is sent over a control interface from the SMO/Non-RT RIC to the external application servers (or alternatively to the Core Network servers, such as Gateway or NEF server or SEAL functionality). This control interface may be referred to as "RAN information exposure - Control," for example, as illustrated in the Figure 5A.

The SMO/Non-RT RIC may then authenticate the request and check if the external application is authorized to obtain the data. The SMO may also apply policing based on confidentiality and other business aspects before serving the request.

Assuming the request is authorized, the SMO/Non-RT RIC may perform one or more of the following optional actions. The SMO/Non-RT RIC may provide or stream the analytics data that it has to the external application server (or NEF/SEAL) using a data interface (e.g., the interface labelled "RAN information exposure - Data" in Figure 5A). The SMO/Non-RT RIC may refer the external application server (NEF/SEAL) to a Near-RT-RIC (e.g., by providing an address) that the application server may contact to request the data and get it provided/streamed from the referred address. In this option, the application server communicates with the Near-RT RIC and obtains the data (e.g., over a combined "RAN information exposure - Data/Control" interface). The SMO/Non-RT RIC may provide the application server address to the Near-RT-RIC so that the Near-RT RIC can provide/stream the data to that address, e.g., using the "RAN information exposure - Data" interface.

When the SMO refers the application server to a Near-RT RIC or sends the application server address to the Near-RT RIC (e.g.,, as described for the second and third options above), the SMO may also allocate security tokens and send them to the Near-RT RIC and to the application server. The tokens may be used by the Near-RT RIC and application server to authenticate the provided/streamed analytics data. The tokens may be accompanied with expiry information (time-based or analytics data volume based or limited to the UE service duration).

When the RAN analytics information data is provided from the Near-RT RIC, the SMO/Non-RT RIC may provide additional RAN analytics information to complement the data provided by the Near-RT RIC.

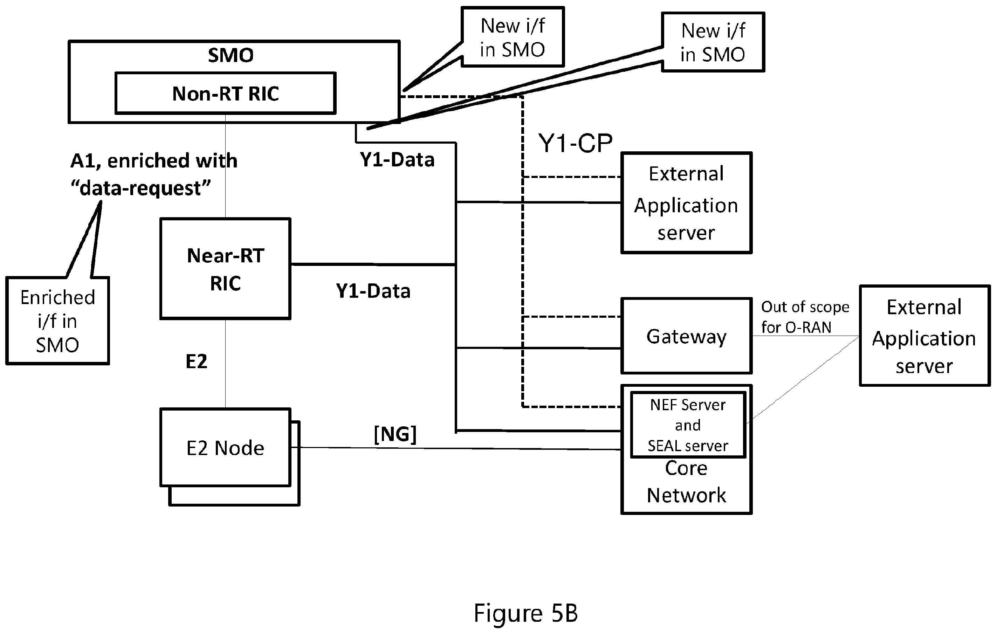

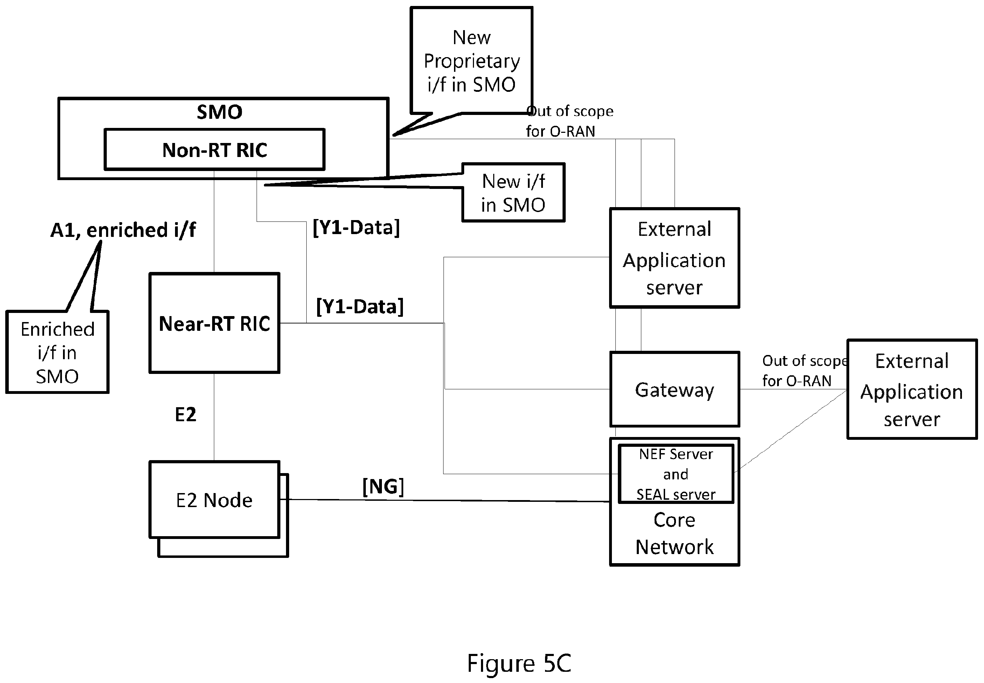

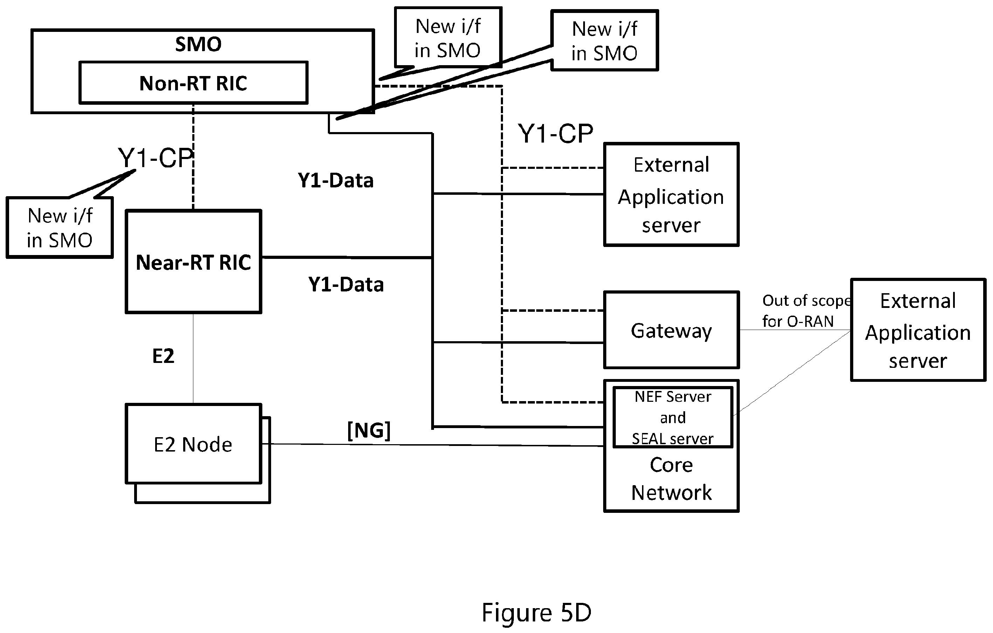

Figures 5B, 5C, and 5D illustrate other example implementations of interfaces in the SMO. For example, the interfaces may include Y1-CP, Y1-Data, and a proprietary interface.

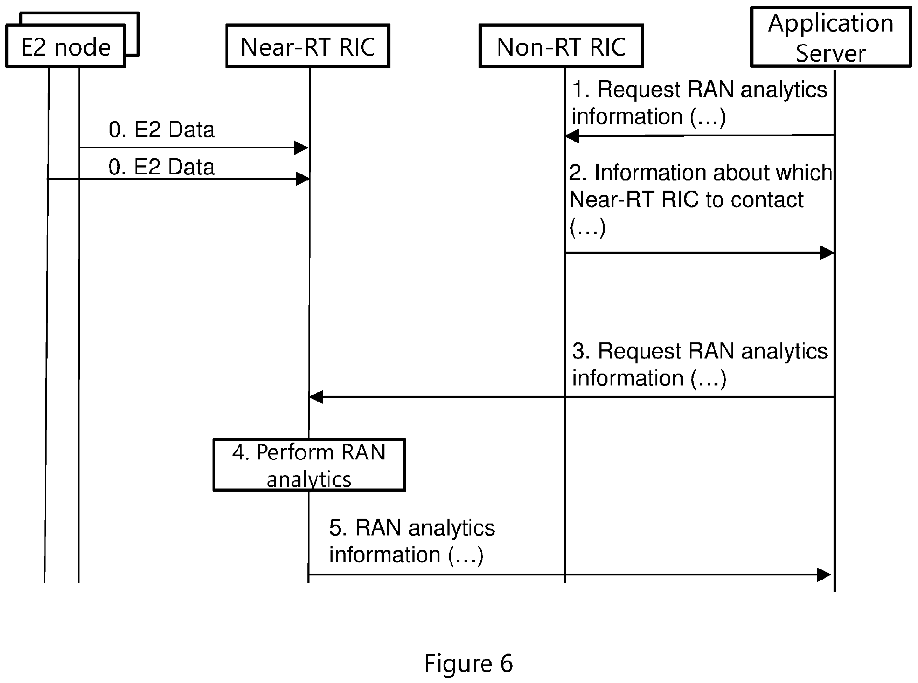

Figures 6-8 show several examples of flowcharts for exposing RAN analytics information to an end user application. It should be noted that more flows and variations of flows are possible in other embodiments of the present disclosure. The embodiments are not exclusive and may be combined with each other and other embodiments.

Figure 6 illustrates a first example flowchart for exposing RAN analytics information to an end user application, according to one or more embodiments of the present disclosure.

In step 1, an external application server contacts the SMO/Non-RT RIC with the wanted service type and analytics data sets. The message may include information indicating what type of analytics information is requested, for which UEs, or for which cells or other areas. The message may contain information indicating whether the application service wants to subscribe to continuous updates of the RAN analytics or if the request is a one-shot request. The message may include other information, such as security information, which may be used by the SMO/Non-RT RIC to verify or authorize the request, as well as information identifying the source of the request, transaction identifiers, etc.

The external application server may communicate directly with the SMO/Non-RT RIC or may communicate via a gateway or NEF. The gateway or NEF is not illustrated to simplify the diagram.

In step 2, the SMO/Non-RT RIC optionally verifies the request, and if the request is authorized, the SMO/Non-RT RIC responds with information about which Near-RT RIC(s) the application server should contact for the requested RAN analytics information. The information about the Near-RT RIC(s) may include one or more Near-RT RIC identifiers, service access points, IP addresses, and/or similar identifiers. The response may also include security information that the application server should use to contact the Near-RT RIC.

In step 3, the external application server contacts the Near-RT RIC indicated by the SMO/Non-RT RIC. The request may include information about the wanted service type and analytics data sets. For example, the message may include information indicating what type of analytics information is requested, for which UEs, for which cells, and/or for which geographical areas. In the same or other examples, the message may include information indicating whether the application service wants to subscribe to continuous updates of the RAN analytics or if this is a one-shot request. In the same or other examples, the message may include other information such as security information, which may be used by the Near-RT RIC to verify or authorize the request, as well as information identifying the source of the request, transaction identifiers, etc. The security information may be associated with information that the SMO/Non-RT RIC provided. In some examples, the request may include an address where the data should be provided, such as IP addresses, service access points, etc.

In step 4, the Near-RT RIC or an xApp running in the Near-RT RIC optionally verifies the request, and if the request is authorized, the Near-RT RIC (or the xApp) performs the RAN analytics function. The analytics may be based on data earlier collected from the E2 nodes (step 0), and/or based on new data that the Near-RT RIC requests from the E2 nodes (not shown in Figure 6).

In step 5, the Near-RT RIC sends the data to the application server, either as a continuous stream of information (e.g., if the application server requested to subscribe to continuous data updates) or as a one shot message or messages.

Figure 7 illustrates a second example flowchart for exposing RAN analytics information to an end user application, according to one or more embodiments of the present disclosure.

In step 1, an external application server contacts the SMO/Non-RT RIC with the wanted service type and analytics data sets. For example, the message may include information indicating what type of analytics information is requested, for which UEs, for which cells, and/or for which geographical areas. In the same or other examples, the message may include information indicating whether the application service wants to subscribe to continuous updates of the RAN analytics or if this is a one-shot request. In the same or other examples, the message may include other information such as security information, which can be used by the SMO/Non-RT RIC to verify or authorize the request, as well as information identifying the source of the request, transaction identifiers, etc. In some examples, the request may include an address where the data should be provided, such as IP addresses, service access points, etc.

In step 2, the SMO/Non-RT RIC optionally verifies the request, and if the request is authorized, forwards the request to the Near-RT RIC(s), e.g., over the A1 interface or other interface. The forwarded request may include additional information provided from the SMO/Non-RT RIC related to security, etc.

In step 3, the Near-RT RIC or an xApp running in the Near-RT RIC optionally verifies the request, and if the request is authorized, the Near-RT RIC (or the xApp) performs the RAN analytics function. The analytics may be based on data earlier collected from the E2 nodes (step 0), or on new data that the Near-RT RIC requests from the E2 nodes (not shown in the figure).

In step 4, the Near-RT RIC sends the data to the application server, either as a continuous stream of information (e.g., if the application server requested to subscribe to continuous data updates) or as a one-time message or messages.

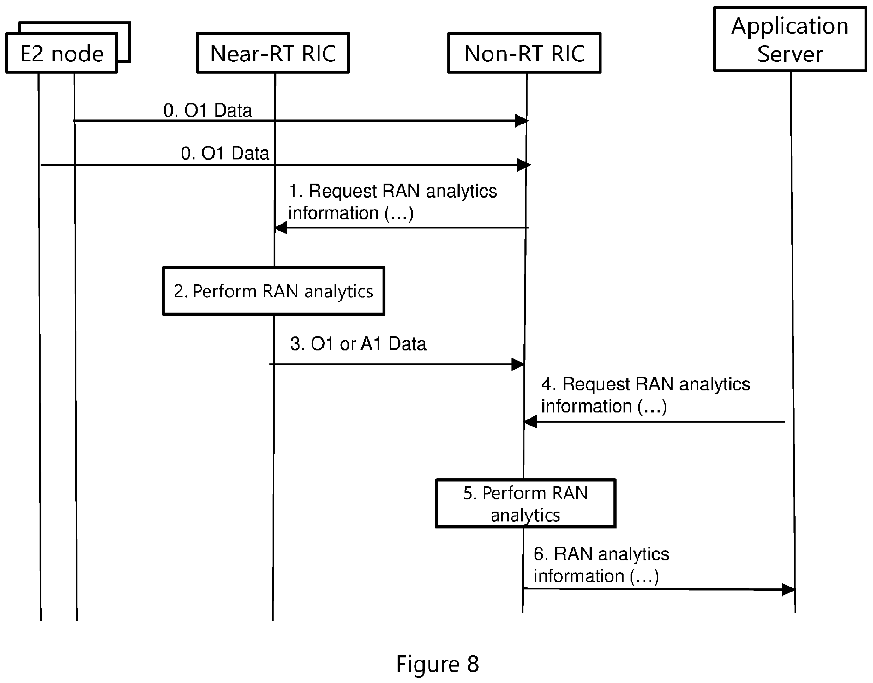

Figure 8 illustrates a third example flowchart for exposing RAN analytics information to an end user application, according to one or more embodiments of the present disclosure.

In step 1, the SMO/Non-RT RIC may optionally request analytics data from the Near-RT RIC. The request may include the type of information that the Near-RT RIC shall provide.

In step 2, (optional) the Near-RT RIC or an xApp running in the Near-RT RIC performs the RAN analytics function. The analytics may be based on data earlier collected from the E2 nodes (step 0), or on new data that the Near-RT RIC requests from the E2 nodes (not shown in the figure).

In step 3, (optional) the Near-RT RIC sends the requested data to the SMO/Non-RT RIC.

In step 4, an external application server contacts the SMO/Non-RT RIC with the requested service type and analytics data sets. For example, the message may include information indicating what type of analytics information is requested, for which UEs, for which cells, and/or for which geographical areas. In the same or other examples, the message may include information indicating whether the application service wants to subscribe to continuous updates of the RAN analytics or if this is a one-shot request. In the same or other examples, the message may include other information such as security information, which may be used by the SMO/Non-RT RIC to verify or authorize the request, as well as information identifying the source of the request, transaction identifiers, etc. In some examples, the request may include an address where the data should be provided, such as IP addresses, service access points, etc.

In step 5, the SMO/Non-RT RIC optionally verifies the request, and if the request is authorized, the SMO/Non-RT RIC performs the RAN analytics function. The analytics may be based on data earlier collected from the E2 nodes (step 0) over the O1 interface, and/or on new data that the Non-RT RIC requests from the E2 nodes (not shown in the figure), for example. In the same or other examples, the analytics may also be based on information provided by Near-RT RIC over A1 or O1 interface e.g. that the SMO/Non-RT RIC has requested from the Near-RT RIC.

In step 6, the SMO/Non-RT RIC sends the data to the application server, either as a continuous stream of information (e.g., if the application server requested to subscribe to continuous data updates) or as a one-time message or messages.

In certain embodiments, one or more embodiments of the present disclosure may be deployed as virtual network functions in a cloud environment (although some radio related functions that may be data sources for the RAN analytics models may be implemented in hardware).

Although certain embodiments have been described with respect to the O-RAN architecture, other embodiments may be deployed in other systems, such as systems where there is a centralized management system analogous to the SMO/Non-RT RIC functionality. Certain embodiments may implement the Near-RT RIC functionality discussed above in the gNB or radio base station (e.g., as an alternative to certain examples discussed above where the Near-RT RIC functionality may be implemented as a separate functional entity). Certain embodiments described above may be implemented in a manner that impacts one or more O-RAN defined interfaces (such as A1, O1, R1, O2) and/or a possible new RAN data analytics interface (which may sometimes be referred to as Y1 (see Figures 5B to 5D)).

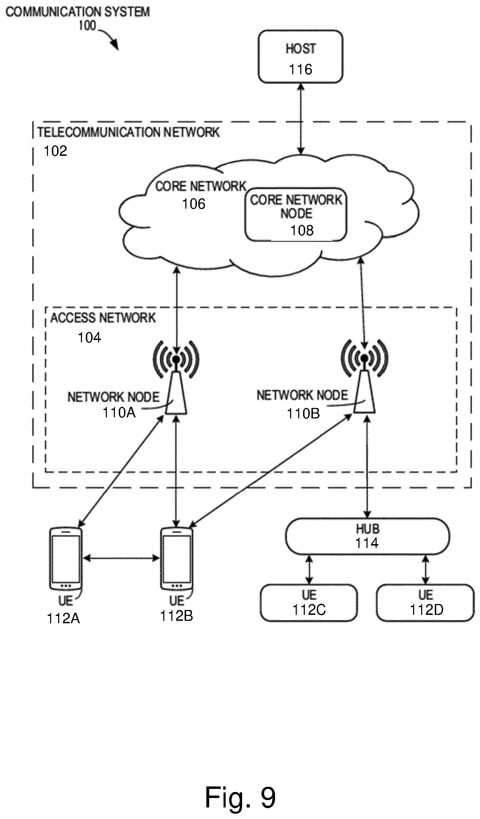

Figure 9 shows an example of a communication system 100 in accordance with some embodiments. In the example, the communication system 100 includes a telecommunication network 102 that includes an access network 104, such as a radio access network (RAN), and a core network 106, which includes one or more core network nodes 108. The access network 104 includes one or more access network nodes, such as network nodes 110a and 110b (one or more of which may be generally referred to as network nodes 110), or any other similar 3^{rd} Generation Partnership Project (3GPP) access node or non-3GPP access point. The network nodes 110 facilitate direct or indirect connection of user equipment (UE), such as by connecting UEs 112a, 112b, 112c, and 112d (one or more of which may be generally referred to as UEs 112) to the core network 106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 100 may include any number of wired or wireless networks, network nodes, UEs, and/or any other components or systems that may facilitate or participate in the communication of data and/or signals whether via wired or wireless connections. The communication system 100 may include and/or interface with any type of communication, telecommunication, data, cellular, radio network, and/or other similar type of system.

The UEs 112 may be any of a wide variety of communication devices, including wireless devices arranged, configured, and/or operable to communicate wirelessly with the network nodes 110 and other communication devices. Similarly, the network nodes 110 are arranged, capable, configured, and/or operable to communicate directly or indirectly with the UEs 112 and/or with other network nodes or equipment in the telecommunication network 102 to enable and/or provide network access, such as wireless network access, and/or to perform other functions, such as administration in the telecommunication network 102.

In the depicted example, the core network 106 connects the network nodes 110 to one or more hosts, such as host 116. These connections may be direct or indirect via one or more intermediary networks or devices. In other examples, network nodes may be directly coupled to hosts. The core network 106 includes one more core network nodes (e.g., core network node 108) that are structured with hardware and software components. Features of these components may be substantially similar to those described with respect to the UEs, network nodes, and/or hosts, such that the descriptions thereof are generally applicable to the corresponding components of the core network node 108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 116 may be under the ownership or control of a service provider other than an operator or provider of the access network 104 and/or the telecommunication network 102, and may be operated by the service provider or on behalf of the service provider. The host 116 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 100 of Figure 9 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 102 is a cellular network that implements 3GPP standardized features. Accordingly, the telecommunications network 102 may support network slicing to provide different logical networks to different devices that are connected to the telecommunication network 102. For example, the telecommunications network 102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 112 are configured to transmit and/or receive information without direct human interaction. For instance, a UE may be designed to transmit information to the access network 104 on a predetermined schedule, when triggered by an internal or external event, or in response to requests from the access network 104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 114 communicates with the access network 104 to facilitate indirect communication between one or more UEs (e.g., UE 112c and/or 112d) and network nodes (e.g., network node 110b). In some examples, the hub 114 may be a controller, router, content source and analytics, or any of the other communication devices described herein regarding UEs. For example, the hub 114 may be a broadband router enabling access to the core network 106 for the UEs. As another example, the hub 114 may be a controller that sends commands or instructions to one or more actuators in the UEs. Commands or instructions may be received from the UEs, network nodes 110, or by executable code, script, process, or other instructions in the hub 114. As another example, the hub 114 may be a data collector that acts as temporary storage for UE data and, in some embodiments, may perform analysis or other processing of the data. As another example, the hub 114 may be a content source. For example, for a UE that is a VR headset, display, loudspeaker or other media delivery device, the hub 114 may retrieve VR assets, video, audio, or other media or data related to sensory information via a network node, which the hub 114 then provides to the UE either directly, after performing local processing, and/or after adding additional local content. In still another example, the hub 114 acts as a proxy server or orchestrator for the UEs, in particular in if one or more of the UEs are low energy IoT devices.

The hub 114 may have a constant/persistent or intermittent connection to the network node 110b. The hub 114 may also allow for a different communication scheme and/or schedule between the hub 114 and UEs (e.g., UE 112c and/or 112d), and between the hub 114 and the core network 106. In other examples, the hub 114 is connected to the core network 106 and/or one or more UEs via a wired connection. Moreover, the hub 114 may be configured to connect to an M2M service provider over the access network 104 and/or to another UE over a direct connection. In some scenarios, UEs may establish a wireless connection with the network nodes 110 while still connected via the hub 114 via a wired or wireless connection. In some embodiments, the hub 114 may be a dedicated hub - that is, a hub whose primary function is to route communications to/from the UEs from/to the network node 110b. In other embodiments, the hub 114 may be a nondedicated hub - that is, a device which is capable of operating to route communications between the UEs and network node 110b, but which is additionally capable of operating as a communication start and/or end point for certain data channels.

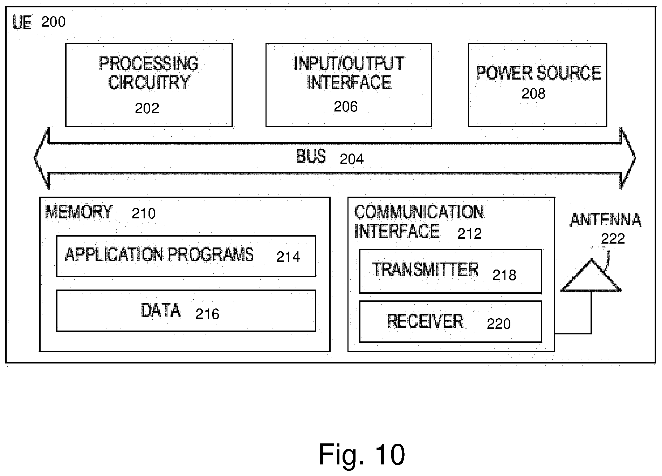

Figure 10 shows a UE 200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 200 includes processing circuitry 202 that is operatively coupled via a bus 204 to an input/output interface 206, a power source 208, a memory 210, a communication interface 212, and/or any other component, or any combination thereof. Certain UEs may utilize all or a subset of the components shown in Figure 2. The level of integration between the components may vary from one UE to another UE. Further, certain UEs may contain multiple instances of a component, such as multiple processors, memories, transceivers, transmitters, receivers, etc.

The processing circuitry 202 is configured to process instructions and data and may be configured to implement any sequential state machine operative to execute instructions stored as machine-readable computer programs in the memory 210. The processing circuitry 202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 202 may include multiple central processing units (CPUs).

In the example, the input/output interface 206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 208 is structured as a battery or battery pack. Other types of power sources, such as an external power source (e.g., an electricity outlet), photovoltaic device, or power cell, may be used. The power source 208 may further include power circuitry for delivering power from the power source 208 itself, and/or an external power source, to the various parts of the UE 200 via input circuitry or an interface such as an electrical power cable. Delivering power may be, for example, for charging of the power source 208. Power circuitry may perform any formatting, converting, or other modification to the power from the power source 208 to make the power suitable for the respective components of the UE 200 to which power is supplied.

The memory 210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 210 includes one or more application programs 214, such as an operating system, web browser application, a widget, gadget engine, or other application, and corresponding data 216. The memory 210 may store, for use by the UE 200, any of a variety of various operating systems or combinations of operating systems.

The memory 210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 210 may allow the UE 200 to access instructions, application programs and the like, stored on transitory or non-transitory memory media, to off-load data, or to upload data. An article of manufacture, such as one utilizing a communication system may be tangibly embodied as or in the memory 210, which may be or comprise a device-readable storage medium.

The processing circuitry 202 may be configured to communicate with an access network or other network using the communication interface 212. The communication interface 212 may comprise one or more communication subsystems and may include or be communicatively coupled to an antenna 222. The communication interface 212 may include one or more transceivers used to communicate, such as by communicating with one or more remote transceivers of another device capable of wireless communication (e.g., another UE or a network node in an access network). Each transceiver may include a transmitter 218 and/or a receiver 220 appropriate to provide network communications (e.g., optical, electrical, frequency allocations, and so forth). Moreover, the transmitter 218 and receiver 220 may be coupled to one or more antennas (e.g., antenna 222) and may share circuit components, software or firmware, or alternatively be implemented separately.

In the illustrated embodiment, communication functions of the communication interface 212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 200 shown in Figure 2.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

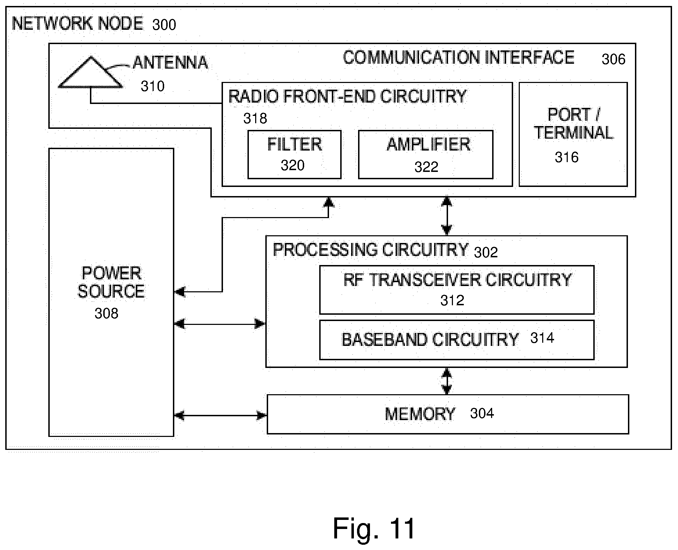

Figure 11 shows a network node 300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 300 includes a processing circuitry 302, a memory 304, a communication interface 306, and a power source 308. The network node 300 may be composed of multiple physically separate components (e.g., a NodeB component and a RNC component, or a BTS component and a BSC component, etc.), which may each have their own respective components. In certain scenarios in which the network node 300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 300 may be configured to support multiple radio access technologies (RATs). In such embodiments, some components may be duplicated (e.g., separate memory 304 for different RATs) and some components may be reused (e.g., a same antenna 310 may be shared by different RATs). The network node 300 may also include multiple sets of the various illustrated components for different wireless technologies integrated into network node 300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 300.

The processing circuitry 302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 300 components, such as the memory 304, to provide network node 300 functionality.

In some embodiments, the processing circuitry 302 includes a system on a chip (SOC). In some embodiments, the processing circuitry 302 includes one or more of radio frequency (RF) transceiver circuitry 312 and baseband processing circuitry 314. In some embodiments, the radio frequency (RF) transceiver circuitry 312 and the baseband processing circuitry 314 may be on separate chips (or sets of chips), boards, or units, such as radio units and digital units. In alternative embodiments, part or all of RF transceiver circuitry 312 and baseband processing circuitry 314 may be on the same chip or set of chips, boards, or units.

The memory 304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 302. The memory 304 may store any suitable instructions, data, or information, including a computer program, software, an application including one or more of logic, rules, code, tables, and/or other instructions capable of being executed by the processing circuitry 302 and utilized by the network node 300. The memory 304 may be used to store any calculations made by the processing circuitry 302 and/or any data received via the communication interface 306. In some embodiments, the processing circuitry 302 and memory 304 is integrated.

The communication interface 306 is used in wired or wireless communication of signaling and/or data between a network node, access network, and/or UE. As illustrated, the communication interface 306 comprises port(s)/terminal(s) 316 to send and receive data, for example to and from a network over a wired connection. The communication interface 306 also includes radio front-end circuitry 318 that may be coupled to, or in certain embodiments a part of, the antenna 310. Radio front-end circuitry 318 comprises filters 320 and amplifiers 322. The radio front-end circuitry 318 may be connected to an antenna 310 and processing circuitry 302. The radio front-end circuitry may be configured to condition signals communicated between antenna 310 and processing circuitry 302. The radio front-end circuitry 318 may receive digital data that is to be sent out to other network nodes or UEs via a wireless connection. The radio front-end circuitry 318 may convert the digital data into a radio signal having the appropriate channel and bandwidth parameters using a combination of filters 320 and/or amplifiers 322. The radio signal may then be transmitted via the antenna 310. Similarly, when receiving data, the antenna 310 may collect radio signals which are then converted into digital data by the radio front-end circuitry 318. The digital data may be passed to the processing circuitry 302. In other embodiments, the communication interface may comprise different components and/or different combinations of components.

In certain alternative embodiments, the network node 300 does not include separate radio front-end circuitry 318, instead, the processing circuitry 302 includes radio front-end circuitry and is connected to the antenna 310. Similarly, in some embodiments, all or some of the RF transceiver circuitry 312 is part of the communication interface 306. In still other embodiments, the communication interface 306 includes one or more ports or terminals 316, the radio front-end circuitry 318, and the RF transceiver circuitry 312, as part of a radio unit (not shown), and the communication interface 306 communicates with the baseband processing circuitry 314, which is part of a digital unit (not shown).

The antenna 310 may include one or more antennas, or antenna arrays, configured to send and/or receive wireless signals. The antenna 310 may be coupled to the radio front-end circuitry 318 and may be any type of antenna capable of transmitting and receiving data and/or signals wirelessly. In certain embodiments, the antenna 310 is separate from the network node 300 and connectable to the network node 300 through an interface or port.

The antenna 310, communication interface 306, and/or the processing circuitry 302 may be configured to perform any receiving operations and/or certain obtaining operations described herein as being performed by the network node. Any information, data and/or signals may be received from a UE, another network node and/or any other network equipment. Similarly, the antenna 310, the communication interface 306, and/or the processing circuitry 302 may be configured to perform any transmitting operations described herein as being performed by the network node. Any information, data and/or signals may be transmitted to a UE, another network node and/or any other network equipment.

The power source 308 provides power to the various components of network node 300 in a form suitable for the respective components (e.g., at a voltage and current level needed for each respective component). The power source 308 may further comprise, or be coupled to, power management circuitry to supply the components of the network node 300 with power for performing the functionality described herein. For example, the network node 300 may be connectable to an external power source (e.g., the power grid, an electricity outlet) via an input circuitry or interface such as an electrical cable, whereby the external power source supplies power to power circuitry of the power source 308. As a further example, the power source 308 may comprise a source of power in the form of a battery or battery pack which is connected to, or integrated in, power circuitry. The battery may provide backup power should the external power source fail.

Embodiments of the network node 300 may include additional components beyond those shown in Figure 11 for providing certain aspects of the network node's functionality, including any of the functionality described herein and/or any functionality necessary to support the subject matter described herein. For example, the network node 300 may include user interface equipment to allow input of information into the network node 300 and to allow output of information from the network node 300. This may allow a user to perform diagnostic, maintenance, repair, and other administrative functions for the network node 300.

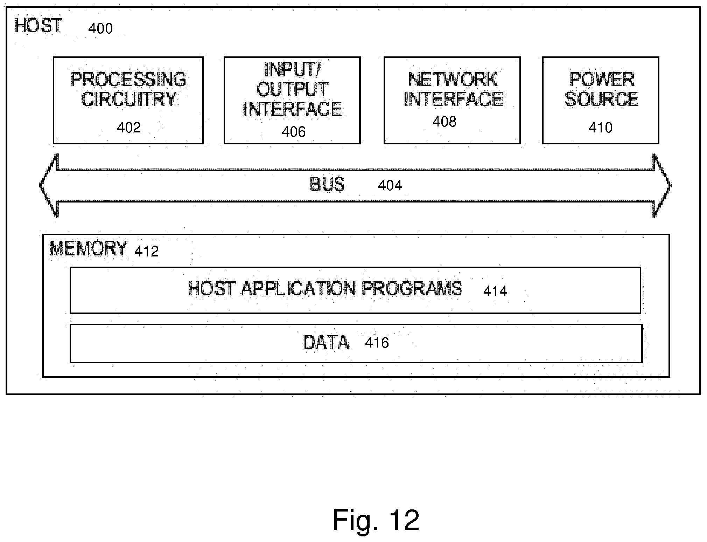

Figure 12 is a block diagram of a host 400, which may be an embodiment of the host 116 of Figure 1, in accordance with various aspects described herein. As used herein, the host 400 may be or comprise various combinations hardware and/or software, including a standalone server, a blade server, a cloud-implemented server, a distributed server, a virtual machine, container, or processing resources in a server farm. The host 400 may provide one or more services to one or more UEs.

The host 400 includes processing circuitry 402 that is operatively coupled via a bus 404 to an input/output interface 406, a network interface 408, a power source 410, and a memory 412. Other components may be included in other embodiments. Features of these components may be substantially similar to those described with respect to the devices of previous figures, such as Figures 10 and 3, such that the descriptions thereof are generally applicable to the corresponding components of host 400.

The memory 412 may include one or more computer programs including one or more host application programs 414 and data 416, which may include user data, e.g., data generated by a UE for the host 400 or data generated by the host 400 for a UE. Embodiments of the host 400 may utilize only a subset or all of the components shown. The host application programs 414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 414 may also provide for user authentication and licensing checks and may periodically report health, routes, and content availability to a central node, such as a device in or on the edge of a core network. Accordingly, the host 400 may select and/or indicate a different host for over-the-top services for a UE. The host application programs 414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

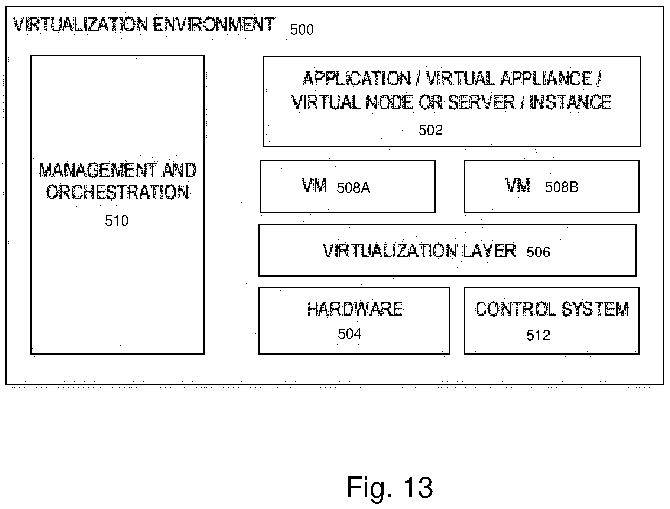

Figure 13 is a block diagram illustrating a virtualization environment 500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 502 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 506 (also referred to as hypervisors or virtual machine monitors (VMMs)), provide VMs 508a and 508b (one or more of which may be generally referred to as VMs 508), and/or perform any of the functions, features and/or benefits described in relation with some embodiments described herein. The virtualization layer 506 may present a virtual operating platform that appears like networking hardware to the VMs 508.

The VMs 508 comprise virtual processing, virtual memory, virtual networking or interface and virtual storage, and may be run by a corresponding virtualization layer 506. Different embodiments of the instance of a virtual appliance 502 may be implemented on one or more of VMs 508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 508 may be a software implementation of a physical machine that runs programs as if they were executing on a physical, non-virtualized machine. Each of the VMs 508, and that part of hardware 504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 508 on top of the hardware 504 and corresponds to the application 502.

Hardware 504 may be implemented in a standalone network node with generic or specific components. Hardware 504 may implement some functions via virtualization. Alternatively, hardware 504 may be part of a larger cluster of hardware (e.g. such as in a data center or CPE) where many hardware nodes work together and are managed via management and orchestration 510, which, among others, oversees lifecycle management of applications 502. In some embodiments, hardware 504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 512 which may alternatively be used for communication between hardware nodes and radio units.

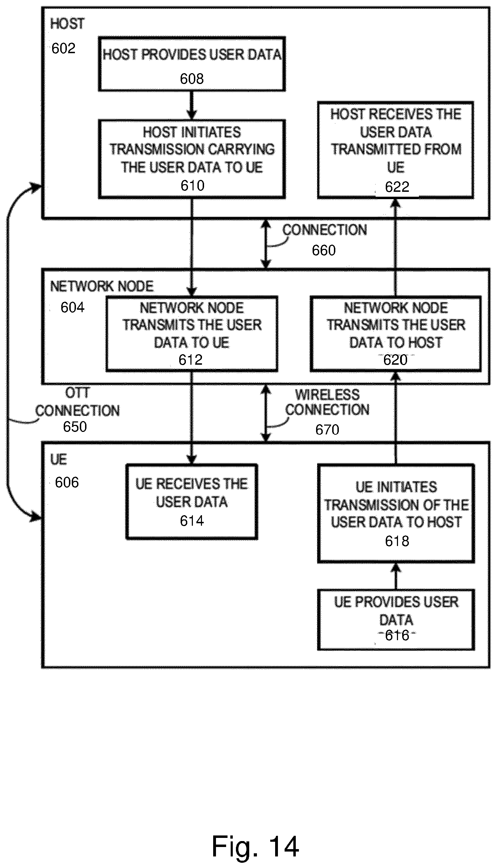

Figure 14 shows a communication diagram of a host 602 communicating via a network node 604 with a UE 606 over a partially wireless connection in accordance with some embodiments. Example implementations, in accordance with various embodiments, of the UE (such as a UE 112a of Figure 9 and/or UE 200 of Figure 2), network node (such as network node 110a of Figure 9 and/or network node 300 of Figure 3), and host (such as host 116 of Figure 9 and/or host 400 of Figure 4) discussed in the preceding paragraphs will now be described with reference to Figure 6.

Like host 400, embodiments of host 602 include hardware, such as a communication interface, processing circuitry, and memory. The host 602 also includes software, which is stored in or accessible by the host 602 and executable by the processing circuitry. The software includes a host application that may be operable to provide a service to a remote user, such as the UE 606 connecting via an over-the-top (OTT) connection 650 extending between the UE 606 and host 602. In providing the service to the remote user, a host application may provide user data which is transmitted using the OTT connection 650.

The network node 604 includes hardware enabling it to communicate with the host 602 and UE 606. The connection 660 may be direct or pass through a core network (like core network 106 of Figure 1) and/or one or more other intermediate networks, such as one or more public, private, or hosted networks. For example, an intermediate network may be a backbone network or the Internet.

The UE 606 includes hardware and software, which is stored in or accessible by UE 606 and executable by the UE's processing circuitry. The software includes a client application, such as a web browser or operator-specific "app" that may be operable to provide a service to a human or non-human user via UE 606 with the support of the host 602. In the host 602, an executing host application may communicate with the executing client application via the OTT connection 650 terminating at the UE 606 and host 602. In providing the service to the user, the UE's client application may receive request data from the host's host application and provide user data in response to the request data. The OTT connection 650 may transfer both the request data and the user data. The UE's client application may interact with the user to generate the user data that it provides to the host application through the OTT connection 650.

The OTT connection 650 may extend via a connection 660 between the host 602 and the network node 604 and via a wireless connection 670 between the network node 604 and the UE 606 to provide the connection between the host 602 and the UE 606. The connection 660 and wireless connection 670, over which the OTT connection 650 may be provided, have been drawn abstractly to illustrate the communication between the host 602 and the UE 606 via the network node 604, without explicit reference to any intermediary devices and the precise routing of messages via these devices.

As an example of transmitting data via the OTT connection 650, in step 608, the host 602 provides user data, which may be performed by executing a host application. In some embodiments, the user data is associated with a particular human user interacting with the UE 606. In other embodiments, the user data is associated with a UE 606 that shares data with the host 602 without explicit human interaction. In step 610, the host 602 initiates a transmission carrying the user data towards the UE 606. The host 602 may initiate the transmission responsive to a request transmitted by the UE 606. The request may be caused by human interaction with the UE 606 or by operation of the client application executing on the UE 606. The transmission may pass via the network node 604, in accordance with the teachings of the embodiments described throughout this disclosure. Accordingly, in step 612, the network node 604 transmits to the UE 606 the user data that was carried in the transmission that the host 602 initiated, in accordance with the teachings of the embodiments described throughout this disclosure. In step 614, the UE 606 receives the user data carried in the transmission, which may be performed by a client application executed on the UE 606 associated with the host application executed by the host 602.

In some examples, the UE 606 executes a client application which provides user data to the host 602. The user data may be provided in reaction or response to the data received from the host 602. Accordingly, in step 616, the UE 606 may provide user data, which may be performed by executing the client application. In providing the user data, the client application may further consider user input received from the user via an input/output interface of the UE 606. Regardless of the specific manner in which the user data was provided, the UE 606 initiates, in step 618, transmission of the user data towards the host 602 via the network node 604. In step 620, in accordance with the teachings of the embodiments described throughout this disclosure, the network node 604 receives user data from the UE 606 and initiates transmission of the received user data towards the host 602. In step 622, the host 602 receives the user data carried in the transmission initiated by the UE 606.

One or more of the various embodiments improve the performance of OTT services provided to the UE 606 using the OTT connection 650, in which the wireless connection 670 forms the last segment. More precisely, the teachings of these embodiments may improve the data rate and latency and thereby provide benefits such as reduced user waiting time, better responsiveness, and better QoE.

In an example scenario, factory status information may be collected and analyzed by the host 602. As another example, the host 602 may process audio and video data which may have been retrieved from a UE for use in creating maps. As another example, the host 602 may collect and analyze real-time data to assist in controlling vehicle congestion (e.g., controlling traffic lights). As another example, the host 602 may store surveillance video uploaded by a UE. As another example, the host 602 may store or control access to media content such as video, audio, VR or AR which it can broadcast, multicast or unicast to UEs. As other examples, the host 602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 650 between the host 602 and UE 606, in response to variations in the measurement results. The measurement procedure and/or the network functionality for reconfiguring the OTT connection may be implemented in software and hardware of the host 602 and/or UE 606. In some embodiments, sensors (not shown) may be deployed in or in association with other devices through which the OTT connection 650 passes; the sensors may participate in the measurement procedure by supplying values of the monitored quantities exemplified above, or supplying values of other physical quantities from which software may compute or estimate the monitored quantities. The reconfiguring of the OTT connection 650 may include message format, retransmission settings, preferred routing etc.; the reconfiguring need not directly alter the operation of the network node 604. Such procedures and functionalities may be known and practiced in the art. In certain embodiments, measurements may involve proprietary UE signaling that facilitates measurements of throughput, propagation times, latency and the like, by the host 602. The measurements may be implemented in that software causes messages to be transmitted, in particular empty or 'dummy' messages, using the OTT connection 650 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

In certain embodiments, a network node may be external to a RAN. As an example, a first network node, such as the consumer application may be associated with a third party (rather than being associate with an operator of the RAN). In certain embodiments, certain network nodes may be associated with the RAN or an operator of the RAN. For example, a second network node may be referred to as the SMO/Non-RT RIC, and a third network node may be referred to as the Near-RT RIC. In certain embodiments, the second network node may provide certain controls for one or more radio network nodes (such as a radio base station, eNB, gNB, CU, DU, RU, etc.) or may otherwise facilitate functionality of the radio network nodes in the RAN. In other embodiments, the second network node may itself be a radio network node configured to perform the described methods. The third network node may be a service manager, a centralized node, or other type of node that may, for example, support one or more second nodes. For example, the third node may facilitate the management and optimization of the RAN. In certain embodiments, the second network node acts in near-real time and the third network node acts in non-real time to facilitate functionality of the RAN.

The first network node, the second network node, and the third network node may each include functionality that facilitates RAN analytics exposure, in accordance with certain embodiments. In certain embodiments, any of the first node, the second node, and/or the third node may further support other functionality. In certain embodiments, the first network node comprises an application server, the second network node comprises a near-RT RIC, and the third network node comprise a non-RT RIC. These network nodes may be used in an O-RAN. For example, the first network node, the second network node, and the third network node may be configured to support any of the interfaces and/or methods described above including, for example, as described with respect to Figures 5, 5B, 5C, 5D, 6, 7, and/or 8. In other embodiments, each of the first network node, the second network node, and the third network node may be implemented in a network node analogous to an application server, a near-RT RIC, and a non-RT RIC, respectively, such as may be used in other types of networks.

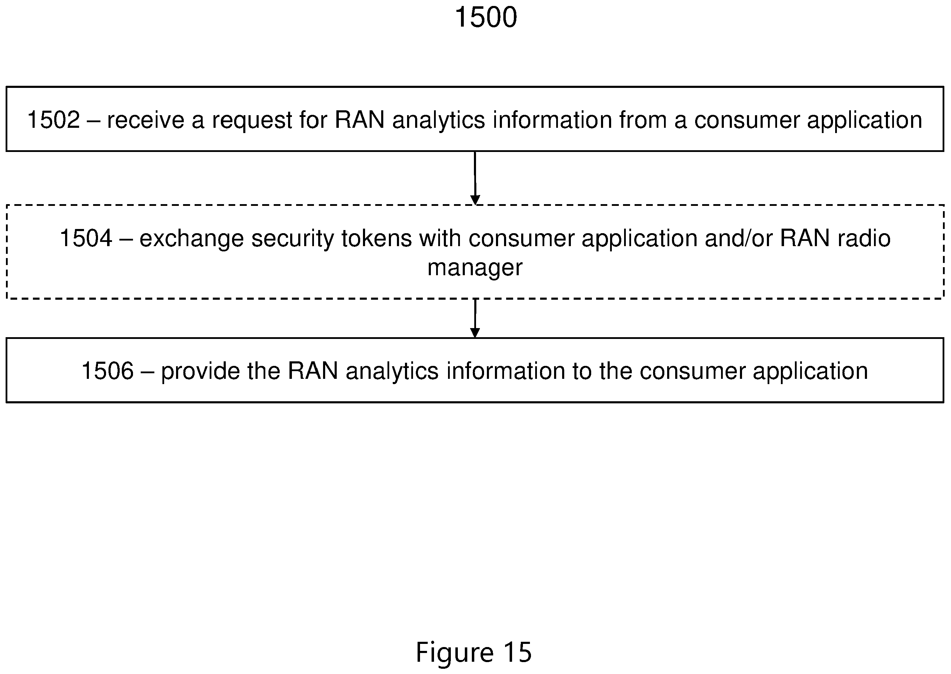

Figure 15 illustrates an example flowchart for a method 1500 for exposing RAN analytics information, according to one or more embodiments of the present disclosure. In particular embodiments, one or more steps of method 1500 may be performed by a service gateway. A service gateway may comprise a SMO/Non-RT RIC as described with respect to Figures 3-8. In some examples, the service gateway comprise hardware described with respect to host 400 described with respect to Figures 19 and 12.

The method 1500 begins at step 1502, where the service gateway (e.g., SMO/Non-RT RIC) receives a request for RAN analytics information from a consumer application. The consumer application may comprise an external server, application server, NEF, external exposure service, etc. The service gateway may communicate directly with the consumer application, or via another gateway or NEF server.

In particular embodiments, the request for the RAN analytics information comprises at least one of the following: one or more user equipment (UEs) for which the request is requested; or one or more cells for which the request is requested.

In particular embodiments, the request for the RAN analytics information comprises an indication of whether to provide updated RAN analytics information periodically.

At step 1506, the service gateway provides the RAN analytics information to the consumer application. The service gateway may provide the RAN analytics information to the consumer application according to any of the embodiments and examples described above.

For example, in particular embodiments the service gateway provides the RAN analytics information to the consumer application by obtaining data for determining the RAN analytics information from the RAN radio manager (e.g., Near-RT RIC). In response to receiving the request for RAN analytics information from the consumer application, the service gateway determines the RAN analytics information based on the data received from the RAN radio manager and sends the RAN analytics information to the consumer application. An examples is described with respect to Figure 8.

In particular embodiments, providing the RAN analytics information to the consumer application comprises sending the consumer application information indicating the RAN radio manager from which to request the RAN analytics information. An example is described with respect to Figure 6.

In particular embodiments, providing the RAN analytics information to the consumer application comprises, in response to receiving the request for the RAN analytics information from the consumer application, sending a second request for the RAN analytics information to the RAN radio manager. The RAN radio manager is configured to provide the RAN analytics information to the consumer application. An example is illustrated in Figure 7.

In particular embodiments, determining the RAN analytics information is further based on data collected from E2 nodes over an O1 interface.

In particular embodiments, the information indicating the RAN radio manager comprises at least one of the following: one or more RAN radio manager identifiers; one or more service access points; or one or more internet protocol (IP) addresses of the RAN radio manager.

Some embodiments may include optional step 1504, where the service gateway exchanges security tokens. For example, the service gateway may send a first security token for verifying the request to the RAN radio manager. The service gateway may send a second security token for verifying the RAN analytics information to the consumer application.

The terms "application server" or "external server" may be referred to as a consumer application in the present disclosure. The consumer application may consume the received RAN analytics information and use it to estimate the QoE of a service (e.g., received media data) and/or to trigger actions to adapt the video codec rates, etc.

Modifications, additions, or omissions may be made to the method of Figure 15. Additionally, one or more steps in the method of Figure 15 may be performed in parallel or in any suitable order.

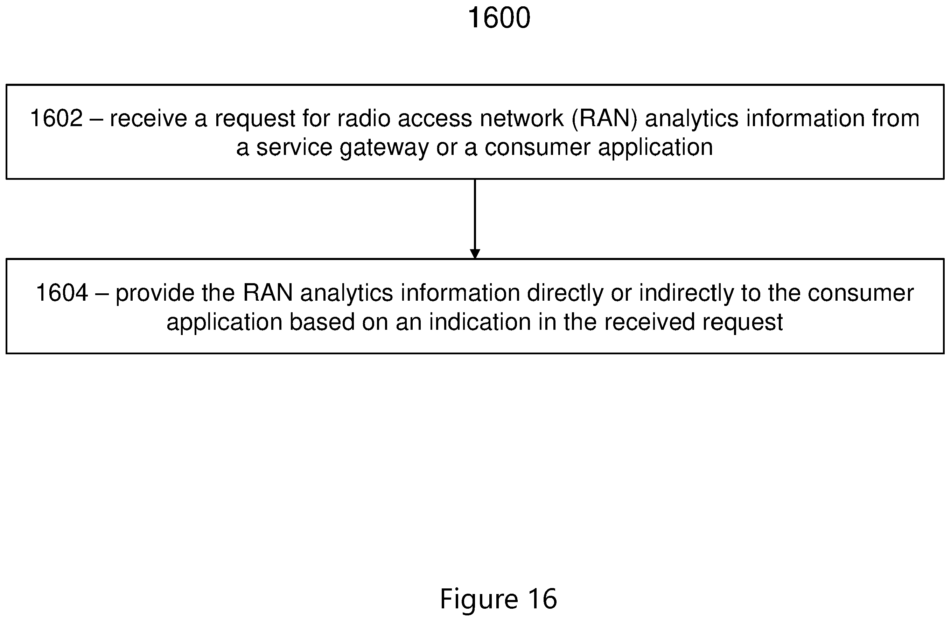

Figure 16 illustrates an example flowcharts for a method 1600 for exposing RAN analytics information, according to one or more embodiments of the present disclosure. In particular embodiments, one or more steps of method 1600 may be performed by a RAN radio manager (e.g., Near-RT RIC). In some examples, the RAN radio manager may comprise network node 300 described with respect to Figure 10.

The method 1600 begins at step 1602, where the RAN radio manager receives a request for RAN analytics information from a service gateway or a consumer application. In some embodiments, the request indicates the consumer application to which to send the RAN analytics information. In other embodiments, the RAN radio manager may send the RAN analytics to the consumer application via the service gateway.

**In** particular embodiments, the request for RAN analytics information is received from the consumer application. In particular embodiments, request for RAN analytics information is received from the service gateway.

The request for RAN analytics information may be received according to any of the embodiments and examples described herein (e.g., see Figures 6-8).

At step 1604, the RAN radio manager provides the RAN analytics information directly or indirectly to the consumer application based on the indication in the received request.

**In** particular embodiments, the request for RAN analytics information is received from a service gateway and the RAN analytics information is provided indirectly from the RAN radio manager to the consumer application via the service gateway (e.g., see Figure 8).

**In** particular embodiments, providing the RAN analytics information to the consumer application indirectly via the service gateway comprises, in response to receiving the request for RAN analytics information from the service gateway, sending the service gateway data for determining the RAN analytics information. The service gateway is configured to determine the RAN analytics information based on the data and to provide the RAN analytics information to the consumer application.

Modifications, additions, or omissions may be made to the method of Figure 16. Additionally, one or more steps in the method of Figure 16 may be performed in parallel or in any suitable order.

Some portions of the foregoing detailed description have been presented in terms of algorithms and symbolic representations of transactions on data bits within a computer memory. These algorithmic descriptions and representations are ways used by those skilled in the data processing arts to most effectively convey the substance of their work to others skilled in the art. An algorithm is here, and generally, conceived to be a self-consistent sequence of transactions leading to a desired result. The transactions are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be appreciated, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing" or "computing" or "calculating" or "determining" or "displaying" or the like, refer to actions and processes of a computer system, or a similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general-purpose systems may be used with programs in accordance with the teachings herein, or it may prove convenient to construct more specialized apparatus to perform the required method transactions. The required structure for a variety of these systems will appear from the description above. In addition, embodiments of the present disclosure are not described with reference to any particular programming language. It should be appreciated that a variety of programming languages may be used to implement the teachings of embodiments as described herein.

Some embodiments may comprise an article of manufacture in which a non-transitory machine-readable medium (such as microelectronic memory) has stored thereon instructions (e.g., computer code) which program one or more data processing components (generically referred to here as a "processor") to perform the operations described above. In other embodiments, some of these operations might be performed by specific hardware components that contain hardwired logic (e.g., dedicated digital filter blocks and state machines). Those operations might alternatively be performed by any combination of programmed data processing components and fixed hardwired circuit components.

In the foregoing detailed description, some embodiments have been described with reference to specific example embodiments thereof. It will be evident that various modifications may be made thereto without departing from the teachings as set forth in the following claims. The specification and drawings are, accordingly, to be regarded in an illustrative sense rather than a restrictive sense.

Throughout the description, some embodiments have been presented through flow diagrams. It should be appreciated that the order of transactions and transactions described in these flow diagrams are only intended for illustrative purposes and not intended as a limitation of the present disclosure. One having ordinary skill in the art would recognize that variations can be made to the flow diagrams without departing from the scope of the present disclosure as set forth in the following claims.

## Claims

1. A method performed by a Service Management & Orchestrator / Non-Real Time Radio Access Network Intelligent Controller, SMO/Non-RT RIC, the method comprising:
receiving (1502) a request for radio access network, RAN, analytics information from a consumer application; and
providing (1506) the RAN analytics information to the consumer application, wherein the consumer application is running on an application server, wherein providing the RAN analytics information to the consumer application comprises:
obtaining data for determining the RAN analytics information from the Near-Real Time Radio Access Network Intelligent Controller, Near-RT RIC;
in response to receiving the request for RAN analytics information from the consumer application, determining the RAN analytics information based on the data received from the Near-RT RIC; and
sending the RAN analytics information to the consumer application.

2. The method of claim 1, wherein providing the RAN analytics information to the consumer application comprises sending the consumer application information indicating the Near-RT RIC from which to request the RAN analytics information.

3. The method of any one of claims 1-2, wherein providing the RAN analytics information to the consumer application comprises:
in response to receiving the request for the RAN analytics information from the consumer application, sending a second request for the RAN analytics information to the Near-RT RIC, the Near-RT RIC configured to provide the RAN analytics information to the consumer application.

4. The method of any one of claims 1-3, wherein determining the RAN analytics information is further based on data collected from E2 nodes over an O1 interface.

5. The method of claim 2, wherein the information indicating the Near-RT RIC comprises at least one of the following:
one or more Near-RT RIC identifiers;
one or more service access points; or
one or more internet protocol (IP) addresses of the Near-RT RIC.

6. The method of any one of claims 1-5, wherein the request for the RAN analytics information comprises at least one of the following:
one or more user equipment, UEs, for which the request is requested; or
one or more cells for which the request is requested.

7. The method of any one of claims 1-6, wherein the request for the RAN analytics information comprises an indication of whether to provide updated RAN analytics information periodically.

8. The method of any one of claims 1-7, further comprising:
sending (1504) a first security token for verifying the request to the Near-RT RIC; and
sending (1504) a second security token for verifying the RAN analytics information to the consumer application.

9. A Service Management & Orchestrator /Non-Real Time Radio Access Network Intelligent Controller, SMO/Non-RT RIC, (160) configured to facilitate exposure of radio access network (RAN) analytics information, the SMO/Non-RT RIC comprising processing circuitry (170) operable to:
receive a request for radio access network, RAN, analytics information from a consumer application; and
provide the RAN analytics information to the consumer application, wherein the consumer application is running on an application server, wherein the processing circuitry is operable to provide the RAN analytics information to the consumer application by:
obtaining data for determining the RAN analytics information from the Near-Real Time Radio Access Network Intelligent Controller, Near-RT RIC;
in response to receiving the request for RAN analytics information from the consumer application, determining the RAN analytics information based on the data received from the Near-RT RIC; and
sending the RAN analytics information to the consumer application.

10. A method performed by a Near-Real Time Radio Access Network Intelligent Controller, Near-RT RIC, the method comprising:
receiving (1602) a request for radio access network, RAN, analytics information from a Service Management & Orchestrator/ Non-Real Time Radio Access Network Intelligent Controller, SMO/Non-RT RIC, or a consumer application, the request indicating the consumer application to which to send the RAN analytics information, wherein the consumer application is running on an application server; and
providing (1604) the RAN analytics information directly to the consumer application based on the indication in the received request.

11. The method of claim 10, wherein the request for RAN analytics information is received from the consumer application.

12. The method of claim 10, wherein the request for RAN analytics information is received from the SMO/Non-RT RIC.

13. The method of claim 10, wherein:
the request for RAN analytics information is received from a SMO/Non-RT RIC; and
the RAN analytics information is provided indirectly from the Near-RT RIC to the consumer application via the SMO/Non-RT RIC.

14. The method of claim 13, wherein providing the RAN analytics information to the consumer application indirectly via the SMO/Non-RT RIC comprises:
in response to receiving the request for RAN analytics information from the SMO/Non-RT RIC, sending the SMO/Non-RT RIC data for determining the RAN analytics information, the SMO/Non-RT RIC configured to determine the RAN analytics information based on the data and to provide the RAN analytics information to the consumer application.

15. A Near-Real Time Radio Access Network Intelligent Controller, Near-RT RIC, (160) configured to facilitate exposure of radio access network, RAN, analytics information, the Near-RT RIC comprising processing circuitry (170) operable to:
receive a request for radio access network, RAN, analytics information from a Service Management & Orchestrator /Non-Real Time Radio Access Network Intelligent Controller, SMO /Non-RT RIC, or a consumer application, the request indicating the consumer application to which to send the RAN analytics information, wherein the consumer application is running on an application server, and
provide the RAN analytics information directly to the consumer application based on the indication in the received request.

## Patentansprüche

1. Verfahren, das von einer in den Service Management & Orchestrator integrierten intelligenten Nicht-Echtzeit-Funkzugangsnetzwerk-Steuerung, SMO/Nicht-RT-RIC, durchgeführt wird, wobei das Verfahren Folgendes umfasst:
Empfangen (1502) einer Anforderung für Funkzugangsnetzwerk-Analyseinformationen, RAN-Analyseinformationen, von einer Verbraucheranwendung; und
Bereitstellen (1506) der RAN-Analyseinformationen an die Verbraucheranwendung, wobei die Verbraucheranwendung auf einem Anwendungsserver ausgeführt wird, wobei das Bereitstellen der RAN-Analyseinformationen an die Verbraucheranwendung Folgendes umfasst:
Erhalten von Daten zum Bestimmen der RAN-Analyseinformationen von der intelligenten Beinahe-Echtzeit-Funkzugangsnetzwerk-Steuerung, Beinahe-RT-RIC;
in Reaktion auf das Empfangen der Anforderung für die RAN-Analyseinformationen von der Verbraucheranwendung Bestimmen der RAN-Analyseinformationen basierend auf den von der Beinahe-RT-RIC empfangenen Daten; und
Senden der RAN-Analyseinformationen an die Verbraucheranwendung.

2. Verfahren nach Anspruch 1, wobei das Bereitstellen der RAN-Analyseinformationen an die Verbraucheranwendung Senden von Informationen, die die Beinahe-RT-RIC angeben, von der die RAN-Analyseinformationen angefordert werden sollen, an die Verbraucheranwendung umfasst.

3. Verfahren nach einem der Ansprüche 1-2, wobei das Bereitstellen der RAN-Analyseinformationen an die Verbraucheranwendung Folgendes umfasst:
in Reaktion auf das Empfangen der Anforderung für die RAN-Analyseinformationen von der Verbraucheranwendung Senden einer zweiten Anforderung für die RAN-Analyseinformationen an die Beinahe-RT-RIC, wobei die Beinahe-RT-RIC dazu konfiguriert ist, die RAN-Analyseinformationen an die Verbraucheranwendung bereitzustellen.

4. Verfahren nach einem der Ansprüche 1-3, wobei das Bestimmen der RAN-Analyseinformationen ferner auf Daten basiert, die von E2-Knoten über eine O1-Schnittstelle gesammelt werden.

5. Verfahren nach Anspruch 2, wobei die Informationen, die die Beinahe-RT-RIC angeben, ferner mindestens eines von Folgendem umfassen:
eine oder mehrere Beinahe-RT-RIC-Kennungen;
einen oder mehrere Dienstzugangspunkte oder
eine oder mehrere Internetprotokoll-Adressen (IP-Adressen) der Beinahe-RT-RIC.

6. Verfahren nach einem der Ansprüche 1-5, wobei die Anforderung für die RAN-Analyseinformationen mindestens eines von Folgendem umfasst:
eine oder mehrere Benutzereinrichtungen, UEs, für die die Anforderung gestellt wird; oder
eine oder mehrere Zellen, für die die Anforderung gestellt wird.

7. Verfahren nach einem der Ansprüche 1-6, wobei die Anforderung für die RAN-Analyseinformationen eine Angabe dessen umfasst, ob aktualisierte RAN-Analyseinformationen periodisch bereitgestellt werden sollen.

8. Verfahren nach einem der Ansprüche 1-7, ferner umfassend:
Senden (1504) eines ersten Sicherheitstokens zum Verifizieren der Anforderung an die Beinahe-RT-RIC; und
Senden (1504) eines zweiten Sicherheitstokens zum Verifizieren der RAN-Analyseinformationen an die Verbraucheranwendung.

9. In den Service Management & Orchestrator integrierte intelligente Nicht-Echtzeit-Funkzugangsnetzwerk-Steuerung, SMO/Nicht-RT-RIC, (160), die dazu konfiguriert ist, Darlegung von Funkzugangsnetzwerk-Analyseinformationen (RAN-Analyseinformationen) zu ermöglichen, wobei die SMO/Non-RT-RIC Verarbeitungsschaltungsanordnung (170) umfasst, die zu Folgendem ausgelegt ist:
Empfangen einer Anforderung für Funkzugangsnetzwerk-Analyseinformationen, RAN-Analyseinformationen, von einer Verbraucheranwendung; und
Bereitstellen der RAN-Analyseinformationen an die Verbraucheranwendung, wobei die Verbraucheranwendung auf einem Anwendungsserver ausgeführt wird, wobei die Verarbeitungsschaltungsanordnung zum Bereitstellen der RAN-Analyseinformationen an die Verbraucheranwendung ausgelegt ist durch:
Erhalten von Daten zum Bestimmen der RAN-Analyseinformationen von der intelligenten Beinahe-Echtzeit-Funkzugangsnetzwerk-Steuerung, Beinahe-RT-RIC;
in Reaktion auf das Empfangen der Anforderung für die RAN-Analyseinformationen von der Verbraucheranwendung Bestimmen der RAN-Analyseinformationen basierend auf den von der Beinahe-RT-RIC empfangenen Daten; und
Senden der RAN-Analyseinformationen an die Verbraucheranwendung.

10. Verfahren, das von einer intelligenten Beinahe-Echtzeit-Funkzugangsnetzwerk-Steuerung, Beinahe-RT-RIC, durchgeführt wird, wobei das Verfahren Folgendes umfasst:
Empfangen (1602) einer Anforderung für Funkzugangsnetzwerk-Analyseinformationen, RAN-Analyseinformationen, von einer in den Service Management & Orchestrator integrierten intelligenten Nicht-Echtzeit-Funkzugangsnetzwerk-Steuerung, SMO/Non-RT-RIC, oder einer Verbraucheranwendung, wobei die Anforderung die Verbraucheranwendung angibt, an die die RAN-Analyseinformationen gesendet werden sollen, wobei die Verbraucheranwendung auf einem Anwendungsserver ausgeführt wird; und
Bereitstellen (1604) der RAN-Analyseinformationen direkt an die Verbraucheranwendung basierend auf der Angabe in der empfangenen Anforderung.

11. Verfahren nach Anspruch 10, wobei die Anforderung für RAN-Analyseinformationen von der Verbraucheranwendung empfangen wird.

12. Verfahren nach Anspruch 10, wobei die Anforderung für RAN-Analyseinformationen von der SMO/Nicht-RT-RIC empfangen wird.

13. Verfahren nach Anspruch 10, wobei:
wobei die Anforderung für RAN-Analyseinformationen von der SMO/Nicht-RT-RIC empfangen wird; und
wobei die RAN-Analyseinformationen von der Beinahe-RT-RIC indirekt über die SMO/Nicht-RT-RIC an die Verbraucheranwendung bereitgestellt werden.

14. Verfahren nach Anspruch 13, wobei das indirekte Bereitstellen der RAN-Analyseinformationen über die SMO/Nicht-RT-RIC an die Verbraucheranwendung Folgendes umfasst:
in Reaktion auf das Empfangen der Anforderung für RAN-Analyseinformationen von der SMO/Nicht-RT-RIC Senden von Daten an die SMO/Nicht-RT-RIC zum Bestimmen der RAN-Analyseinformationen, wobei die SMO/Nicht-RT-RIC dazu konfiguriert ist, die RAN-Analyseinformationen basierend auf den Daten zu bestimmen und die RAN-Analyseinformationen an die Verbraucheranwendung bereitzustellen.

15. Intelligente Beinahe-Echtzeit-Funkzugangsnetzwerk-Steuerung, Beinahe-RT-RIC, (160), die dazu konfiguriert ist, Darlegung von Funkzugangsnetzwerk-Analyseinformationen, RAN-Analyseinformationen, zu ermöglichen, wobei die Beinahe-RT-RIC Verarbeitungsschaltungsanordnung (170) umfasst, die zu Folgendem ausgelegt ist:
Empfangen einer Anforderung für Funkzugangsnetzwerk-Analyseinformationen, RAN-Analyseinformationen, von einer in den Service Management & Orchestrator integrierten intelligenten Nicht-Echtzeit-Funkzugangsnetzwerk-Steuerung, SMO/Non-RT-RIC, oder einer Verbraucheranwendung, wobei die Anforderung die Verbraucheranwendung angibt, an die die RAN-Analyseinformationen gesendet werden sollen, wobei die Verbraucheranwendung auf einem Anwendungsserver ausgeführt wird; und
Bereitstellen der RAN-Analyseinformationen direkt an die Verbraucheranwendung basierend auf der Angabe in der empfangenen Anforderung.

## Revendications

1. Procédé réalisé par un orchestrateur et gestionnaire de services/dispositif de commande intelligent de réseau d'accès radio pas en temps réel, SMO/Non-RT RIC, le procédé comprenant :
la réception (1502) d'une demande d'informations d'analyse de réseau d'accès radio, RAN, depuis une application consommateur ; et
la fourniture (1506) des informations d'analyse RAN à l'application consommateur, dans lequel l'application consommateur s'exécute sur un serveur d'applications, dans lequel la fourniture des informations d'analyse RAN à l'application consommateur comprend :
l'obtention de données pour déterminer les informations d'analyse RAN à partir du dispositif de commande intelligent de réseau d'accès radio presque en temps réel, Near-RT RIC ;
en réponse à la réception de la demande d'informations d'analyse RAN depuis l'application consommateur, la détermination des informations d'analyse RAN sur la base des données reçues depuis le Near-RT RIC ; et
l'envoi des informations d'analyse RAN à l'application consommateur.

2. Procédé selon la revendication 1, dans lequel la fourniture des informations d'analyse RAN à l'application consommateur comprend l'envoi des informations d'application consommateur indiquant le Near-RT RIC auquel demander les informations d'analyse RAN.

3. Procédé selon l'une quelconque des revendications 1 à 2, dans lequel la fourniture des informations d'analyse RAN à l'application consommateur comprend :
en réponse à la réception de la demande des informations d'analyse RAN depuis l'application consommateur, l'envoi d'une deuxième demande des informations d'analyse RAN au Near-RT RIC, le Near-RT RIC étant configuré pour fournir les informations d'analyse RAN à l'application consommateur.

4. Procédé selon l'une quelconque des revendications 1 à 3, dans lequel la détermination des informations d'analyse RAN est en outre basée sur des données collectées auprès de nœuds E2 sur une interface O1.

5. Procédé selon la revendication 2, dans lequel les informations indiquant le Near-RT RIC comprennent au moins l'un parmi :
un ou plusieurs identifiants de Near-RT RIC ;
un ou plusieurs points d'accès de service ; ou
une ou plusieurs adresses de protocole Internet (IP) du Near-RT RIC.

6. Procédé selon l'une quelconque des revendications 1 à 5, dans lequel la demande des informations d'analyse RAN comprend au moins l'un parmi :
un ou plusieurs équipements utilisateurs, UE, pour lesquels la demande est formulée ; ou
une ou plusieurs cellules pour lesquelles la demande est formulée.

7. Procédé selon l'une quelconque des revendications 1 à 6, dans lequel la demande des informations d'analyse RAN comprend une indication indiquant s'il faut fournir périodiquement des informations d'analyse RAN mises à jour.

8. Procédé selon l'une quelconque des revendications 1 à 7, comprenant en outre :
l'envoi (1504) d'un premier jeton de sécurité pour la vérification de la demande au Near-RT RIC ; et
l'envoi (1504) d'un deuxième jeton de sécurité pour la vérification des informations d'analyse RAN à l'application consommateur.

9. Orchestrateur et gestionnaire de services/dispositif de commande intelligent de réseau d'accès radio pas en temps réel, SMO/Non-RT RIC, (160) configuré pour faciliter une exposition d'informations d'analyse de réseau d'accès radio (RAN), le SMO/Non-RT RIC comprenant une circuiterie de traitement (170) exploitable pour :
recevoir une demande d'informations d'analyse de réseau d'accès radio, RAN, depuis une application consommateur ; et
fournir les informations d'analyse RAN à l'application consommateur, dans lequel l'application consommateur s'exécute sur un serveur d'applications, dans lequel la circuiterie de traitement est exploitable pour fournir les informations d'analyse RAN à l'application consommateur par :
l'obtention de données pour déterminer les informations d'analyse RAN à partir du dispositif de commande intelligent de réseau d'accès radio presque en temps réel, Near-RT RIC ;
en réponse à la réception de la demande d'informations d'analyse RAN depuis l'application consommateur, la détermination des informations d'analyse RAN sur la base des données reçues depuis le Near-RT RIC ; et
l'envoi des informations d'analyse RAN à l'application consommateur.

10. Procédé réalisé par un dispositif de commande intelligent de réseau d'accès radio presque en temps réel, Near-RT RIC, le procédé comprenant :
la réception (1602) d'une demande d'informations d'analyse de réseau d'accès radio, RAN, depuis un orchestrateur et gestionnaire de services/dispositif de commande intelligent de réseau d'accès radio pas en temps réel, SMO/Non-RT RIC, ou d'une application consommateur, la demande indiquant l'application consommateur à laquelle envoyer les informations d'analyse RAN, dans lequel l'application consommateur s'exécute sur un serveur d'applications ; et
la fourniture (1604) des informations d'analyse RAN directement à l'application consommateur sur la base de l'indication dans la demande reçue.

11. Procédé selon la revendication 10, dans lequel la demande d'informations d'analyse RAN est reçue depuis l'application consommateur.

12. Procédé selon la revendication 10, dans lequel la demande d'informations d'analyse RAN est reçue depuis le SMO/Non-RT RIC.

13. Procédé selon la revendication 10, dans lequel :
la demande d'informations d'analyse RAN est reçue depuis un SMO/Non-RT RIC ; et
les informations d'analyse RAN sont fournies indirectement depuis le Near-RT RIC à l'application consommateur via le SMO/Non-RT RIC.

14. Procédé selon la revendication 13, dans lequel la fourniture des informations d'analyse RAN à l'application consommateur indirectement via le SMO/Non-RT RIC comprend :
en réponse à la réception de la demande d'informations d'analyse RAN depuis le SMO/Non-RT RIC, l'envoi des données de SMO/Non-RT RIC pour la détermination des informations d'analyse RAN, le SMO/Non-RT RIC étant configuré pour déterminer les informations d'analyse RAN sur la base des données et pour fournir les informations d'analyse RAN à l'application consommateur.

15. Dispositif de commande intelligent de réseau d'accès radio presque en temps réel, Near-RT RIC, (160) configuré pour faciliter une exposition d'informations d'analyse de réseau d'accès radio, RAN, le Near-RT RIC comprenant une circuiterie de traitement (170) exploitable pour :
recevoir une demande d'informations d'analyse de réseau d'accès radio, RAN, depuis un orchestrateur et gestionnaire de services/dispositif de commande intelligent de réseau d'accès radio pas en temps réel, SMO/Non-RT RIC, ou d'une application consommateur, la demande indiquant l'application consommateur à laquelle envoyer les informations d'analyse RAN, dans lequel l'application consommateur s'exécute sur un serveur d'applications, et
fournir les informations d'analyse RAN directement à l'application consommateur sur la base de l'indication dans la demande reçue.
